# EUROPEAN PATENT SPECIFICATION

(11) **EP 3 869 073 B1**
(45) Date of publication and mention of the grant of the patent: **29.07.2026**
(21) Application number: 18904490.2
(22) Date of filing: 03.12.2018
(51) Int. Cl.: F16K 27/00, F16K 11/00

(54) **TUBE-IN-TUBE PULL-OUT FAUCET**
ROHR-IN-ROHR-AUSZIEHHAHN
ROBINET RÉTRACTABLE À DOUBLE TUBE

(30) Priority: 17.10.2018 CN 201811208975
(43) Date of publication of application: 25.08.2021
(73) Proprietor: Flowtech Kitchen & Bathroom Technology Co., Ltd, Zhongshan, Guangdong 528400 (CN)
(72) Inventor: HUANG, Weixin, Zhongshan, Guangdong 528400 (CN)
(74) Representative: Cabinet Chaillot
(86) International application number: PCT/CN2018/118945
(87) International publication number: WO 2020/077759

(56) References cited:
- CA-A1- 2 446 038
- CA-A1- 2 918 026
- CN-A- 102 927 322
- CN-A- 106 439 149
- CN-U- 201 844 111
- CN-U- 207 378 203
- DE-A1- 3 434 735
- DE-C1- 10 052 661
- GB-A- 2 461 139
- US-A1- 2016 215 482

## Description

### FIELD OF THE INVENTION

The invention belongs to the technical field of faucet apparatuses and relates to a tube-in-tube pull-out faucet.

### BACKGROUND OF THE INVENTION

At present, in the prior art, DE 100 52 66 1 C1 discloses a pull-out faucet, wherein a pull-out hose after use is retracted by a spring into the spout of the faucet.

Patent Document CN201610180175.4 discloses an integrated pull-out water-filtration faucet which comprises a faucet body, a water discharge tube, a filter element and a water valve, wherein the faucet body has a vertical tube portion which is internally provided with a vertical pull-out passage, a central axis of the pull-out passage is located at one side of a central axis of the vertical tube portion, a bottom end of the vertical tube portion is a water inlet end, a top port of the vertical tube portion is connected with the water discharge tube, sides of the vertical tube portion have a filtering interface and a water valve interface for mounting the filter element and the water valve respectively, a cold water passage, a hot water passage and a return passage are arranged at the water inlet end of the vertical tube portion, the cold water passage and the hot water passage extend to the water valve interface for mixing, the water valve interface is provided with a mixed water flow channel and extends to the filtering interface for filtering, the filtering interface is provided with a return port and extends to the water inlet end to form the return passage which is connected with the pull-out tube, and the pull-out tube passes through the pull-out passage in the vertical tube portion and extends to the water discharge tube to form a pull-out water-discharge structure. Although the above structure can achieve the pull-out of the tube, such pull-out relies on components such as a gravity hammer disposed below the faucet body, and there are the problems that many components are disposed below the faucet body, resulting in a complicated structure, and the interference of the tube with other components or even getting stuck easily occurs during the pull-out of the tube, causing inconvenience to users.

For this reason, the invention provides a tube-in-tube pull-out faucet.

### SUMMARY OF THE INVENTION

In view of the above problems existing in the prior art, an object of the invention is to provide a tube-in-tube pull-out faucet which can reduce the interference with many parts or even difficulty in pulling during pull-out due to no need to pull an inner tube from a lower end, has the advantages of convenience and smoothness in pull-out, can be rotated by 360 degrees and is convenient to use.

The object of the invention can be achieved by the following technical solution.

A tube-in-tube pull-out faucet comprises a faucet body and an outer tube fixed to the faucet body, and further comprises a tube-in-tube pull-out device located above the faucet body, characterized in that the tube pull-out device comprises an inner tube joint, an inner tube joint nut, an inner tube, a first spring bracket, a first pull-out tube joint, an intermediary pull-out tube and a spring which are disposed within the outer tube, one end of the inner tube joint is sleeved on the faucet body or the outer tube and the other end thereof is screwed to the inner tube joint nut, the inner tube joint is provided with an integrally formed joint portion, an outer side wall of the joint portion is in sliding fit with an inner side wall of one end of the inner tube, the other end of the inner tube is sequentially passed through the first spring bracket and the first pull-out tube joint and arranged in the pull-out tube, the first spring bracket is arranged above the inner tube joint nut, the first pull-out tube joint is sleeved in the inner tube joint nut, one end of the pull-out tube is movably sleeved on the pull-out tube joint, the spring is wound around an outer side wall of the pull-out tube, one end of the spring is fixed on the first spring bracket, the other end of the pull-out tube is screwed with a second pull-out joint, one end of the second pull-out joint is communicated with one end of the inner tube, the other end of the second pull-out joint is in screwed communication with a pull-out water-discharge head which is movably sleeved in the outer tube, a second spring bracket is sleeved on outer side walls of the second pull-out joint and the pull-out water-discharge head, and the other end of the spring is fixed to the second spring bracket.

Further, the tube-in-tube pull-out faucet further comprises a low-pressure sealing ring and a back-pressure seal ring which are sleeved on an outer side wall of the inner tube, wherein the back-pressure seal ring is arranged above the low-pressure sealing ring, and the low-pressure sealing ring and the back-pressure seal ring are located in the first spring bracket.

Further, the tube-in-tube pull-out faucet further comprises a first sealing ring, a second sealing ring and a third sealing ring, wherein the first sealing ring and the third sealing ring are clamped on an inner wall of the outer tube in a spaced manner, and the second sealing ring is sleeved on the inner tube joint nut and located between the first sealing ring and the third sealing ring.

Further, the inner tube is made of a PA material.

Further, the outer tube, the inner tube and the pull-out tube are U-shaped.

As described above, the tube-in-tube pull-out faucet involved in the invention has the following beneficial effects:
By utilizing the above tube-in-tube pull-out faucet, compared with the prior art, the invention can reduce the interference with many parts or even difficulty in pulling during pull-out due to no need to pull the inner tube from the lower end by means of the tube-in-tube pull-out device arranged above the faucet body in combination with the tube-in-tube structure consisting of the outer tube, the pull-out tube and the inner tube, has the advantages of convenience and smoothness in pull-out, a simple structure and low cost, can be replaced as a whole when needed, can be conveniently and quickly repaired with high efficiency after sale, can be rotated by 360 degrees and is convenient to use and also eliminates the requirement of the previous art in that the pull out tube does not protrude below the mounting flange of the faucet and is all contained within the faucet body and spout.

The invention will be further described below in conjunction with particular embodiments.

### BRIEF DESCRIPTION OF THE DRAWINGS

Fig. 1 is a front view of a tube-in-tube pull-out faucet;
Fig. 2 is a structural view of a tube-in-tube pull-out faucet taken from another angle and an A-A sectional view at this viewing angle;
Fig. 3 is an enlarged sectional structural view of part B of a tube-in-tube pull-out faucet;
Fig. 4 is an enlarged sectional structural view of part C of a tube-in-tube pull-out faucet;
Fig. 5 is a perspective sectional structural view of a part of a tube-in-tube pull-out faucet; and
Fig. 6 is an enlarged sectional structural view of part D of Fig. 5.

Description of reference numerals of elements

| | |
|---|---|
| 1 | Faucet body |
| 2 | Outer tube |
| 3 | Tube-in-tube pull-out device |
| 31 | Inner tube joint |
| 32 | Inner tube joint nut |
| 33 | Inner tube |
| 34 | First spring bracket |
| 35 | First pull-out tube joint |
| 36 | Pull-out tube |
| 37 | spring |
| 38 | Second pull-out joint |
| 39 | Second spring bracket |
| 4 | Pull-out water-discharge head |
| 5 | Low-pressure sealing ring |
| 6 | Back-pressure seal ring |
| 7 | First sealing ring |
| 8 | Second sealing ring |
| 9 | Third sealing ring |

### DETAILED DESCRIPTION OF THE INVENTION

The embodiments of the invention will be described below by specific particular embodiments, and the persons skilled in the art can readily know other advantages and effects of the invention from the disclosures of the present description.

It should be understood that the structures, proportions, sizes and the like illustrated in the drawings of the specification are only used in combination with the disclosures of the present description for the purpose of understanding and reading by the persons skilled in the art, and are not intended to limit the implementability of the invention. The specific structures can be described with reference to the drawings of the patent application.

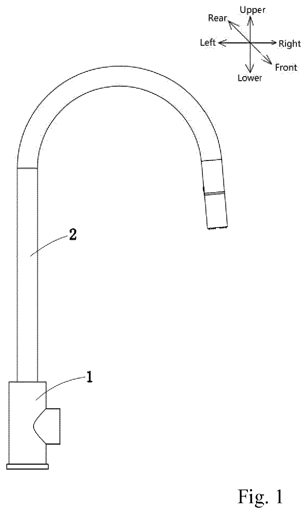

In the following embodiments, the directions are defined by the arrow directions in Fig. 1 of the paper, the left side of the paper is the left direction, the right side of the paper is the right direction, the upper side of the paper is the upper direction, the lower side of the paper is the lower direction, the front side perpendicular to the paper is the front direction, the rear side perpendicular to the paper is the rear direction, the cavity of the faucet body is the inside and the outer side wall of the faucet body is the outside.

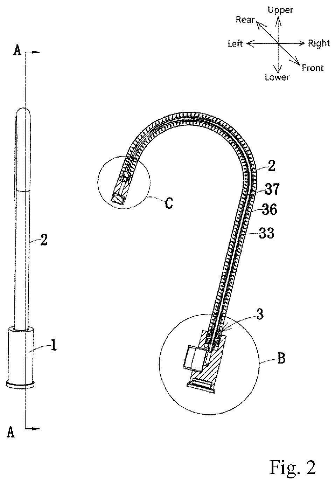

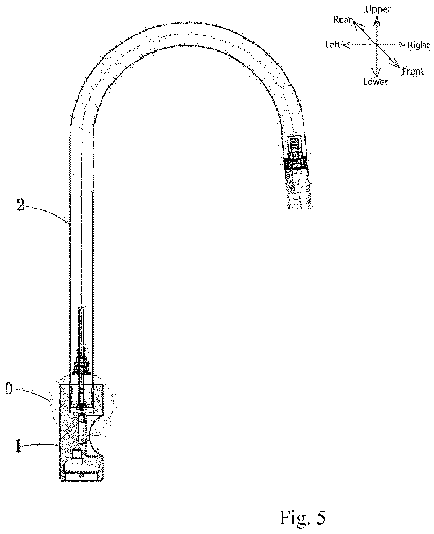

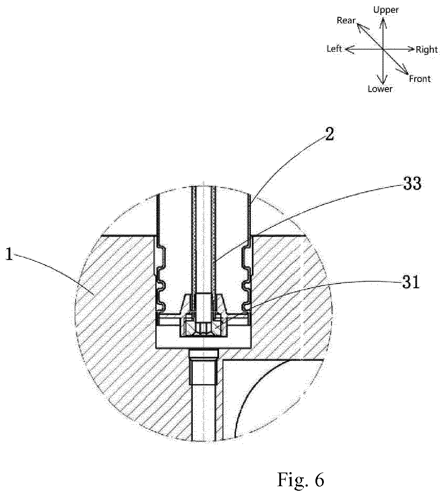

As shown in Figs. 1, 2, 3, 4, 5 and 6, a tube-in-tube pull-out faucet comprises a faucet body 1 and an outer tube 2 fixed to the faucet body 1, and further comprises a tube-in-tube pull-out device 3 located above the faucet body 1, wherein the tube pull-out device 3 comprises an inner tube joint 31, an inner tube joint nut 32, an inner tube 33, a first spring bracket 34, a first pull-out tube joint 35, a stretchable pull-out tube 36 and a spring 37 which are disposed in a cavity of the outer tube 2, one end of the inner tube joint 31 is sleeved on the faucet body 1 or the outer tube 2 and the other end thereof is screwed to the inner tube joint nut 32, the inner tube joint 31 is provided with an integrally formed joint portion, an outer side wall of the joint portion is in sliding fit with an inner side wall of one end of the inner tube 33, the other end of the inner tube 33 is sequentially passed through the first spring bracket 34 and the first pull-out tube joint 35 and arranged in the pull-out tube 36, the first spring bracket 34 is arranged above the inner tube joint nut 32, the first pull-out tube joint 35 is sleeved in the inner tube joint nut 32, one end of the pull-out tube 36 is movably sleeved on the first pull-out tube joint 35, the spring 37 is wound around an outer side wall of the pull-out tube 36, one end of the spring 37 is fixed on the first spring bracket 34, the other end of the pull-out tube 36 is screwed with a second pull-out joint 38, one end of the second pull-out joint 38 is communicated with one end of the inner tube 33, the other end of the second pull-out joint 38 is in screwed communication with a pull-out water-discharge head 4 which is movably sleeved in the outer tube 2, a second spring bracket 39 is sleeved on outer side walls of the second pull-out joint 38 and the pull-out water-discharge head 4, and the other end of the spring 37 is fixed to the second spring bracket 39. By utilizing such structure, compared with the prior art, the invention can reduce the interference with many parts or even difficulty in pulling during pull-out due to no need to pull the inner tube 33 from below the faucet by means of the tube-in-tube pull-out device 3 arranged above the faucet body 1 in combination with the tube-in-tube structure consisting of the outer tube 2, the pull-out tube 36 and the inner tube 33, has the advantages of convenience and smoothness in pull-out, a simple structure and low cost, can be replaced as a whole when needed, can be conveniently and quickly repaired with high efficiency after sale, can be rotated by 360 degrees and is convenient to use and has no pull out tube protruding below the faucet mounting as all the pull out tubes and mechanism are mounted within the spout.

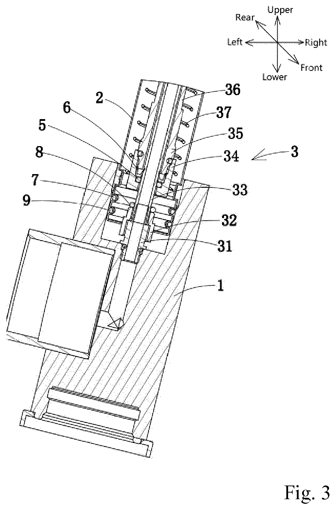

Further, in order to improve the airtightness, as shown in Fig. 3, the tube-in-tube pull-out faucet further comprises a low-pressure sealing ring 5 and a back-pressure seal ring 6 which are sleeved on an outer side wall of the inner tube 33, wherein the back-pressure seal ring 6 is arranged above the low-pressure sealing ring 5, and the low-pressure sealing ring 5 and the back-pressure seal ring 6 are located in the first spring bracket 34. In this way, the airtightness is improved and water leakage can be avoided. In addition, when the pull-out tube 36 is released for backlash, the arrangement of the back-pressure seal ring 6 can effectively counteract the impact force and can reduce the wear of the first spring bracket 34, thereby prolonging the service life and reducing the maintenance cost.

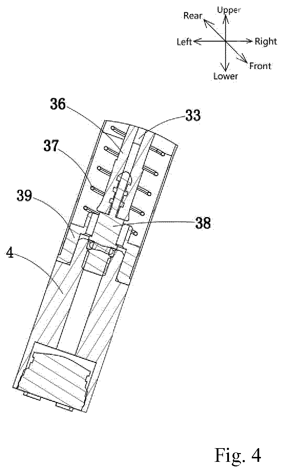

Further, as shown in Fig. 4, the tube-in-tube pull-out faucet further comprises a first sealing ring 7, a second sealing ring 8 and a third sealing ring 9, wherein the first sealing ring 7 and the third sealing ring 9 are clamped on an inner wall of the outer tube 2 in a spaced manner, and the second sealing ring 8 is sleeved on the inner tube joint nut 32 and located between the first sealing ring 7 and the third sealing ring 9.

Further, the inner tube 33 is made of a PA material (or similar). However, its materials are not limited thereto, and the inner tube 33 may also be made of other materials, e.g. a rigid inner tube 33.

Further, as shown in Figs. **1****,** 3 and 4, the outer tube 2, the inner tube 33 and the pull-out tube 36 are U-shaped. However, their shapes are not limited thereto, and it is also possible to provide the outer tube 2 or the inner tube 33 or the pull-out tube 36 with other shapes or in combination.

As described above, the tube-in-tube pull-out faucet involved in the invention has the following beneficial effects:
By utilizing the above tube-in-tube pull-out faucet, compared with the prior art, the invention can reduce the interference with many parts or even difficulty in pulling during pull-out due to no need to pull the inner tube from below the faucet by means of the tube-in-tube pull-out device arranged above the faucet body in combination with the tube-in-tube structure consisting of the outer tube, the pull-out tube and the inner tube, has the advantages of convenience and smoothness in pull-out, a simple structure and low cost, can be replaced as a whole when needed, can be conveniently and quickly repaired with high efficiency after sale, can be rotated by 360 degrees and is convenient to use.

In summary, the invention effectively overcomes various disadvantages in the prior art and has a high industrial application value.

The above embodiments are only used for illustratively describing the principles and effects of the invention, rather than limiting the invention. Any persons skilled in the art can make modifications or changes to the above embodiments without departing from the scope of the invention as defined in the following claims.

## Claims

1. A tube-in-tube pull-out faucet comprising a faucet body (1) and an outer tube (2) fixed to the faucet body (1), further comprising a tube-in-tube pull-out device (3) located above the faucet body (1), wherein the tube-in-tube pull-out device (3) comprises an inner tube joint (31), an inner tube joint nut (32), an inner tube (33), a first spring bracket (34), a first pull-out tube joint (35), a stretchable pull-out tube (36) and a spring (37) wherein the tube-in-tube pull-out device is disposed within the outer tube (2), one end of the inner tube joint (31) is sleeved on the faucet body (1) or the outer tube (2) and the other end thereof is screwed to the inner tube joint nut (32), the inner tube joint (31) is provided with an integrally formed joint portion, an outer side wall of the joint portion is in sliding fit with an inner side wall of one end of the inner tube (33), the other end of the inner tube (33) is sequentially passed through the first spring bracket (34) and the first pull-out tube joint (35) and arranged in the pull-out tube (36), the first spring bracket (34) is arranged above the inner tube joint nut (32), the first pull-out tube joint (35) is sleeved in the inner tube joint nut (32), one end of the pull-out tube (36) is movably sleeved on the first pull-out tube joint (35), the spring (37) is wound around an outer side wall of the pull-out tube (36), one end of the spring (37) is fixed on the first spring bracket (34), the other end of the pull-out tube (36) is screwed with a second pull-out joint (38), one end of the second pull-out joint (38) is communicated with one end of the inner tube (33), the other end of the second pull-out joint (38) is in screwed communication with a pull-out water-discharge head (4) which is movably sleeved in the outer tube (2), a second spring bracket (39) is sleeved on outer side walls of the second pull-out joint (38) and the pull-out water-discharge head (4), and the other end of the spring (37) is fixed to the second spring bracket (39).

2. The tube-in-tube pull-out faucet according to claim **1,** further comprising a low-pressure sealing ring (5) and a back-pressure seal ring (6) which are sleeved on an outer side wall of the inner tube (33), wherein the back-pressure seal ring (6) is arranged above the low-pressure sealing ring (5), and the low-pressure sealing ring (5) and the back-pressure seal ring (6) are located in the first spring bracket (34).

3. The tube-in-tube pull-out faucet according to claim 1, further comprising a first sealing ring (7), a second sealing ring (8) and a third sealing ring (9), wherein the first sealing ring (7) and the third sealing ring (9) are clamped on an inner wall of the outer tube (2) in a spaced manner, and the second sealing ring (8) is sleeved on the inner tube joint nut (32) and located between the first sealing ring (7) and the third sealing ring (9).

4. The tube-in-tube pull-out faucet according to claim 1, wherein the inner tube (33) is made of a PA material.

5. The tube-in-tube pull-out faucet according to claim 1, wherein the outer tube (2), the inner tube (33) and the pull-out tube (36) are U-shaped.

## Patentansprüche

1. - Rohr-in-Rohr-Ausziehhahn, umfassend einen Bahnkörper (1) und ein an dem Bahnkörper (1) befestigtes Außenrohr (2), ferner umfassend eine Rohr-in-Rohr-Ausziehvorrichtung (3), die sich oberhalb des Bahnkörpers (1) befindet,
wobei die Rohr-in-Rohr-Ausziehvorrichtung (3) ein Innenrohrverbindungsstück (31), eine Innenrohrverbindungsstückmutter (32), ein Innenrohr (33), eine erste Federhalterung (34), ein erstes Ausziehrohrverbindungsstück (35), ein dehnbares Ausziehrohr (36) und eine Feder (37) umfasst, wobei die Rohr-in-Rohr-Ausziehvorrichtung innerhalb des Außenrohrs (2) angeordnet ist, ein Ende des Innenrohrverbindungsstücks (31) auf den Bahnkörper (1) oder das Außenrohr (2) aufgesteckt ist und das andere Ende davon mit der Innenrohrverbindungsstückmutter (32) verschraubt ist, das Innenrohrverbindungsstück (31) mit einem einstückig gebildeten Verbindungsabschnitt versehen ist, eine äußere Seitenwand des Verbindungsabschnitts mit einer inneren Seitenwand eines Endes des Innenrohrs (33) in Gleitpassung ist, das andere Ende des Innenrohrs (33) nacheinander durch die erste Federhalterung (34) und das erste Ausziehrohrverbindungsstück (35) hindurchgeführt und in dem Ausziehrohr (36) angeordnet ist, der erste Federhalter (34) oberhalb der Innenrohrverbindungsstückmutter (32) angeordnet ist, das erste Ausziehrohrverbindungsstück (35) in der Innenrohrverbindungsstückmutter (32) aufgesteckt ist, ein Ende des Ausziehrohrs (36) bewegbar auf das erste Ausziehrohrverbindungsstück (35) aufgesteckt ist, die Feder (37) um eine äußere Seitenwand des Ausziehrohrs (36) gewickelt ist, ein Ende der Feder (37) an der ersten Federhalterung (34) befestigt ist, das andere Ende des Ausziehrohrs (36) mit einem zweiten Ausziehverbindungsstück (38) verschraubt ist, ein Ende des zweiten Ausziehverbindungsstücks (38) mit einem Ende des Innenrohrs (33) in Verbindung ist, das andere Ende des zweiten Ausziehverbindungsstücks (38) mit einem bewegbar in dem Außenrohr (2) aufgesteckten ausziehbaren Wasserauslasskopf (4) in Schraubverbindung ist, eine zweite Federhalterung (39) auf äußere Seitenwände des zweiten Ausziehverbindungsstücks (38) und des ausziehbaren Wasserauslasskopfs (4) aufgesteckt ist, und das andere Ende der Feder (37) an der zweiten Federhalterung (39) befestigt ist.

2. - Rohr-in-Rohr-Ausziehhahn nach Anspruch 1, ferner umfassend einen Niederdruckdichtring (5) und einen Gegendruckdichtring (6), die auf eine äußere Seitenwand des Innenrohrs (33) aufgesteckt sind, wobei der Gegendruckdichtring (6) oberhalb des Niederdruckdichtrings (5) angeordnet ist und der Niederdruckdichtring (5) und der Gegendruckdichtring (6) in der ersten Federhalterung (34) angeordnet sind.

3. - Rohr-in-Rohr-Ausziehhahn nach Anspruch 1, ferner umfassend einen ersten Dichtring (7), einen zweiten Dichtring (8) und einen dritten Dichtring (9), wobei der erste Dichtring (7) und der dritte Dichtring (9) in einem Abstand voneinander an einer Innenwand des Außenrohrs (2) eingespannt sind und der zweite Dichtring (8) auf die Innenrohrverbindungsstückmutter (32) aufgesteckt ist und sich zwischen dem ersten Dichtring (7) und dem dritten Dichtring (9) befindet.

4. - Rohr-in-Rohr-Ausziehhahn nach Anspruch 1, wobei das Innenrohr (33) aus einem PA-Material gefertigt ist.

5. - Rohr-in-Rohr-Ausziehhahn nach Anspruch 1, wobei das Außenrohr (2), das Innenrohr (33) und das Ausziehrohr (36) U-förmig sind.

## Revendications

1. - Robinet rétractable à double tube comprenant un corps de robinet (1) et un tube extérieur (2) fixé au corps de robinet (1), comprenant en outre un dispositif rétractable à double tube (3) situé au-dessus du corps de robinet (1),
dans lequel le dispositif rétractable à double tube (3) comprend un raccord de tube intérieur (31), un écrou de raccord de tube intérieur (32), un tube intérieur (33), un premier support de ressort (34), un premier raccord de tube rétractable (35), un tube rétractable étirable (36) et un ressort (37), le dispositif rétractable à double tube étant disposé à l'intérieur du tube extérieur (2), une extrémité du raccord de tube intérieur (31) étant emmanchée sur le corps de robinet (1) ou le tube extérieur (2) et son autre extrémité étant vissée à l'écrou de raccord de tube intérieur (32), le raccord de tube intérieur (31) comportant une partie raccord formée d'un seul tenant, une paroi latérale extérieure de la partie raccord étant en ajustement coulissant avec une paroi latérale intérieure d'une extrémité du tube intérieur (33), l'autre extrémité du tube intérieur (33) étant amenée à passer successivement à travers le premier support de ressort (34) et le premier raccord de tube rétractable (35) et étant disposée dans le tube rétractable (36), le premier support de ressort (34) étant disposé au-dessus de l'écrou de raccord de tube intérieur (32), le premier raccord de tube rétractable (35) étant emmanché dans l'écrou de raccord de tube intérieur (32), une extrémité du tube rétractable (36) étant emmanchée de manière mobile sur le premier raccord de tube rétractable (35), le ressort (37) étant enroulé autour d'une paroi latérale extérieure du tube rétractable (36), une extrémité du ressort (37) étant fixée sur le premier support de ressort (34), l'autre extrémité du tube rétractable (36) étant vissée à un second raccord rétractable (38), une extrémité du second raccord rétractable (38) étant en communication avec une extrémité du tube intérieur (33), l'autre extrémité du second raccord rétractable (38) étant en liaison de vissage avec une tête de sortie d'eau rétractable (4) qui est emmanchée de manière mobile dans le tube extérieur (2), un second support de ressort (39) étant emmanché sur des parois latérales extérieures du second raccord rétractable (38) et de la tête de sortie d'eau rétractable (4), et l'autre extrémité du ressort (37) étant fixée au second support de ressort (39).

2. - Robinet rétractable à double tube selon la revendication 1, comprenant en outre une bague d'étanchéité basse pression (5) et une bague d'étanchéité à contre-pression (6) qui sont emmanchées sur une paroi latérale extérieure du tube intérieur (33), la bague d'étanchéité à contre-pression (6) étant disposée au-dessus de la bague d'étanchéité basse pression (5), et la bague d'étanchéité basse pression (5) et la bague d'étanchéité à contre-pression (6) étant situées dans le premier support de ressort (34).

3. - Robinet rétractable à double tube selon la revendication 1, comprenant en outre une première bague d'étanchéité (7), une deuxième bague d'étanchéité (8) et une troisième bague d'étanchéité (9), la première bague d'étanchéité (7) et la troisième bague d'étanchéité (9) étant serrées sur une paroi intérieure du tube extérieur (2) d'une manière espacée, et la deuxième bague d'étanchéité (8) étant emmanchée sur l'écrou de raccord de tube intérieur (32) et située entre la première bague d'étanchéité (7) et la troisième bague d'étanchéité (9).

4. - Robinet rétractable à double tube selon la revendication 1, dans lequel le tube intérieur (33) est fait d'un matériau PA.

5. - Robinet rétractable à double tube selon la revendication 1, dans lequel le tube extérieur (2), le tube intérieur (33) et le tube rétractable (36) sont en forme de U.
